# EUROPÄISCHE PATENTSCHRIFT

(11) **EP 1 717 471 B1**
(45) Veröffentlichungstag und Bekanntmachung des Hinweises auf die Patenterteilung: **13.02.2008**
(21) Anmeldenummer: 06007654.4
(22) Anmeldetag: 12.04.2006
(51) Int. Cl.: F16D 13/64

(54) **Kupplungsscheibe für eine Kupplungseinrichtung**
Clutch disc for a clutch device
Disque d'embrayage pour un dispositif d'embrayage

(30) Priorität: 28.04.2005 DE 102005019772
(43) Veröffentlichungstag der Anmeldung: 02.11.2006
(73) Patentinhaber: ZF FRIEDRICHSHAFEN AG, 88046 Friedrichshafen (DE)
(72) Erfinder: Bokisch, Winfried, 97490 Poppenhausen (DE); Buer, Gerald, 96172 Mühlhausen (DE)

(56) Entgegenhaltungen:
- EP-A- 1 657 462
- DE-A1- 4 206 321
- DE-A1- 10 240 991
- DE-A1- 19 626 688

## Beschreibung

Die Erfindung betrifft eine Kupplungsscheibe für eine Kupplungseinrichtung, insbesondere für eine Kraftfahrzeugkupplungseinrichtung, umfassend einen um eine Drehachse herum angeordneten und im wesentlichen scheibenförmig oder ringscheibenförmig ausgebildeten Belagträger, an dem, vorzugsweise an beiden seiner Stirnseiten, mindestens ein Reibbelag befestigt ist, wobei in oder an dem mindestens einen Reibbelag ein Verstärkungselement angeordnet ist.

Eine Kupplungsscheibe der gattungsgemäßen Art ist aus der DE 42 06 321 A1 bekannt. Bei dieser Ausführung wird angestrebt, die Kupplungsscheibe bei geringem Herstellungsaufwand und bei geringem Massenträgheitsmoment mit einer hohen Drehzahlfestigkeit, d. h. Berstfestigkeit, zu versehen. Hierzu ist vorgesehen, dass ein als Verstärkungselement ausgebildeter Ring - vorzugsweise im radial inneren oder äußeren Endbereich des Reibbelags - mit dem Reibbelag verbunden, vorzugsweise in diesen integriert wird.

Die gattungsgemäße DE 102 40 991 A1 offenbart auch eine derartige Kupplungsschiebe mit Verstärkungselement.

Eine andere Lösung ist aus der DE 196 26 688 A1 bekannt. Dort ist kein Verstärkungselement in den Reibbelag integriert, sondern der Belagträger ist mit einer in Umfangsrichtung verlaufenden Sicke ausgeführt, so dass sich eine Versteifung ergibt. Ferner sind in den Belagträger Öffnungen eingebracht, die eine Aufstellung im Randbereich aufweisen, womit ein verbesserter Halt des Reibbelags am Belagträger erzielt werden soll.

Die Kupplungsscheibe wird in der Kupplungseinrichtung zwischen einer Anpressplatte und einem Schwungrad angeordnet. Durch Beaufschlagung der Anpressplatte mit einer axial wirkenden Kraft wird Reibschluss zwischen Anpressplatte, Kupplungsscheibe und Schwungrad hergestellt, wodurch ein Drehmoment übertragen werden kann. Dabei wirkt zwischen zwei Reibpartnem, also einerseits zwischen der Anpressplatte und der Kupplungsscheibe und andererseits zwischen der Kupplungsscheibe und dem Schwungrad, eine Reibkraft, die sich aus dem Produkt aus Anpresskraft und Reibkoeffizient ergibt.

Die Tendenz zu immer höheren Drehmomenten bei Kupplungssystemen bringt einen höheren Verschleiß der Reibbeläge mit sich. Zusätzlich wird bei manchen Anwendungen nach einer gewissen Laufzeit ein Belagfederwegrückgang festgestellt. Die Ursache hierfür liegt außer am Verschleiß selber an einer Deformation der Beläge entsprechend der Form des Belagträgers. Die Folge ist ein ungleichmäßiger Verschleiß des Reibbelags. Während des Einkuppeln trägt sich die Oberfläche auf der Reibseite des Kupplungsbelags plan ab, was dazu führt, dass die Stellen, die durch den Belagträger besser unterstützt werden, schneller verschleißen. Die nicht so gut unterstützten Bereiche werden aufgrund von Druck und Temperatur nach hinten durchgedrückt. Die Rückseite des Kupplungsbelags passt sich an die Welligkeit des Belagträgers an.

Ein daraus resultierendes Problem besteht also darin, dass der Reibbelag am Belagträger nicht ideal abgestützt werden kann, so dass der Reibbelag im Betrieb keine absolut ebene Auflagefläche bildet. Vielmehr liegen besser und weniger gut vom Belagträger unterstützte Bereiche im Reibbelag vor, so dass es zu einem ungleichmäßigen Verschleiß des Reibbelags über dessen Umfang kommt. Um dies zu verhindern, wäre eine derart stabile Ausgestaltung des Belagträgers erforderlich, dass dies mit dem Zwang zum Leichtbau nicht vereinbar ist.

Durch die Beaufschlagung mit dem Übertragungsdrehmoment kann es an der mittels Nieten hergestellten Verbindungsstelle zwischen Reibbelag und Belagträger zu Verformungen kommen, nämlich zu Langlöchern, die durch Verdrängung des relativ weichen Materials des Reibbelags entstehen. Dies ist nachteilig, da sich der Reibbelag von der Belagfeder lösen kann.

Bekannt sind auch Verschleißausgleichssysteme, die jedoch einen hohen Aufwand erfordern und damit teuer sind.

Ansonsten im Stand der Technik bekannte Verstärkungsbleche dienen in erster Linie zur Erhöhung der Berstfestigkeit; eine Biegung der Kupplungsscheibe um eine Achse, die senkrecht auf der Drehachse steht, kann damit jedoch nicht nennenswert verhindert werden.

Der Erfindung liegt daher die **Aufgabe** zugrunde, eine Kupplungsscheibe der eingangs genannten Art so fortzubilden, dass es in einfacher und kostengünstiger Weise möglich ist, die vorstehenden Nachteile zu verringern bzw. zu beheben. Die Verbindung, insbesondere die Vernietung zwischen Reibbelag und Belagträger soll zu keiner Langlochbildung führen können, wodurch die Befestigung zur Übertragung des Drehmoments verbessert werden soll. Gleichzeitig soll das Widerstandmoment der Kupplungsscheibe gegen Biegung um eine zur Drehachse senkrechte Achse möglichst hoch sein, um ein gleichmäßiges Verschleißen des Reibbelags über den Umfang der Kupplungsscheibe zu erreichen. Es soll also die Biegesteifigkeit des Reibbelags erhöht werden, um auf der Rückseite des Reibbelags eine wellige Anpassung an den Belagträger zu verhindern.

Die **Lösung** dieser Aufgabe durch die Erfindung ist dadurch gekennzeichnet, dass der Belagträger, mindestens ein Reibbelag und das Verstärkungselement mit mindestens einem Befestigungselement miteinander verbunden sind, wobei das Verstärkungselement als sich über einen vorgegebenen Umfangsabschnitt der Kupplungsscheibe herum erstreckendes Ringteil oder Ringabschnittteil ausgebildet ist, dessen radiale Erstreckung, abgesehen von mindestens einer Verdickungen zur zumindest teilweisen Umfassung des mindestens einen Befestigungselements, klein ist im Verhältnis zur radialen Erstreckung des Reibbelags.

Mit dieser Ausgestaltung wird es möglich, eine sehr feste Verbindung zwischen Belagträger und Reibbelag zu erzielen, der nicht der Gefahr ausgesetzt ist, dass sich im Laufe der Betriebszeit Langlöcher an der Verbindungsstelle bilden. Dies stellt das Verstärkungselement sicher, das sich mit seinen hier als Verdickungen bezeichneten Bereichen um das Befestigungselement herum erstreckt und so keine Möglichkeit zur Langlochbildung bietet. Durch das angebundene oder integrierte Verstärkungselement wird ferner das Widerstandsmoment gegen Biegung der Kupplungsscheibe um eine senkrecht zur Drehachse liegende Achse wesentlich erhöht, so dass ein gleichmäßigeres Tragbild des Reibbelags erreicht wird. Dabei kommt es übrigens nicht darauf an, dass das Verstärkungselement als geschlossener Ring ausgebildet ist. Auch Ringsegmente oder Ringteile erfüllen den genannten Zweck und führen zu der vorteilhaften Ausgestaltung.

Wesentlich ist, dass die radiale Erstreckung des Verstärkungselements deutlich geringer ist als diejenige des Reibbeiags. Hierbei ist speziell vorgesehen, dass die radiale Erstreckung des Verstärkungselements maximal 25 % der radialen Erstreckung des Reibbelags beträgt; eine besonders bevorzugte Ausgestaltung sieht vor, dass die radiale Erstreckung des Verstärkungselements maximal 15 % der radialen Erstreckung des Reibbelags beträgt.

Nach einer Ausgestaltung erstreckt sich das Verstärkungselement ringförmig über den gesamten Umfang der Kupplungsscheibe. Es kann aber auch vorgesehen werden, dass sich das Verstärkungselement nur über einen Teil des Umfangs der Kupplungsscheibe erstreckt. In diesem Falle kann sich das Verstärkungselement bevorzugt über einen Umfangsabschnitt der Kupplungsscheibe zwischen 45° und 180° erstrecken.

Eine weitere Ausführungsform sieht vor, dass das oder jedes Verstärkungselement aus zwei Teilen besteht, die an einer radial ausgerichteten Oberfläche aneinander liegen. Die beiden Teile können dabei jeweils mindestens eine Teilverdickung aufweisen, die zusammenwirkend die Verdickung zur zumindest teilweisen Umfassung des mindestens einen Befestigungselements bilden.

Die Verdickungen, die das Befestigungselement zumindest teilweise umfassen, können als Ring oder Ringabschnitt ausgebildet sein, der sich zumindest teilweise um ein Befestigungselement herum erstreckt. Wenn der Reibbelag und das Verstärkungselement in einem gemeinsamen Herstellungsprozess gefertigt werden, kann es zu Spannungen innerhalb des Reibbelags kommen, da sich die Materialien bei Erwärmung unterschiedlich verhalten. Um dies zu verhindern, sieht eine Fortbildung vor, dass der Ringabschnitt an mindestens einer Umfangsstelle eine Unterbrechung aufweist. Die Unterbrechung kann sich dabei über einen Umfangsabschnitt zwischen 5° und 20° erstrecken.

Nach einer weiteren Ausführungsform ist für das Verstärkungselement ein profiliertes Grundteil vorgesehen. Insbesondere kann vorgesehen werden, dass zumindest ein Teil des Verstärkungselements in einem Radialschnitt eine U-förmige Kontur aufweist. Dabei können sich die beiden Schenkel der U-förmigen Kontur in Achsrichtung der Kupplungsscheibe erstrecken. Indes kann der Verbindungsabschnitt der U-förmigen Kontur als Auflagefläche für einen Teil des Befestigungselements ausgebildet sein. Grundsätzlich können auch andere Profilformen zum Einsatz kommen, z. B. ein T-Profil, ein H-Profil, ein L-Profil o. ä.

Um die bereits erwähnte Spannungsbildung im Inneren des Reibbelags bei dessen Fertigung zu verhindern, kann als eine spezielle Variante vorgesehen werden, dass das Verstärkungselement mindestens einen Ausgleichsabschnitt zum Längenausgleich in Umfangsrichtung aufweist. Hierbei kann vorgesehen sein, dass der Ausgleichsabschnitt durch einen mäanderförmigen Verlauf des Verstärkungselements gebildet wird. In Umfangsrichtung kann dann das Verstärkungselement nach Art einer Ziehharmonika gedehnt werden. Dies zeigt auch, dass es nicht auf die Ausbildung einer geschlossenen Ringkontur des Verstärkungselements ankommt, im Unterschied zu den vorbekannten Lösungen im Stand der Technik.

Das Verstärkungselement kann im Reibbelag in einer radialen Höhe angeordnet werden, die zwischen 20% und 80% der radialen Erstreckung des Reibbelags, vom radial innenliegenden Ende des Reibbelags aus gemessen, beträgt. Bevorzugt beträgt die radiale Höhe zwischen 30% und 40% der radialen Erstreckung des Reibbelags. Dadurch kann das Verstärkungselement in die "neutrale Zone" des Reibbelags gebracht werden. Hierunter ist zu verstehen, dass dies derjenige Ort ist, der bei herstellungsbedingten Temperaturschwankungen keiner oder nur einer geringen unterschiedlichen Ausdehnung zwischen Reibbelagsmaterial und Verstärkungselement ausgesetzt ist.

Damit ein guter Verbund zwischen dem Reibbelag und dem Verstärkungselement gegeben ist, kann die Oberfläche des Verstärkungselements aufgeraut werden. Eine Möglichkeit hierfür ist das Einbringen einer Riffelung in die Oberfläche des Verstärkungselements. Weiterhin kann die Oberfläche durch Beaufschlagung mit einem Medium, insbesondere durch Sandstrahlen, aufgeraut sein. Eine weitere Möglichkeit ist die Beaufschlagung der Oberfläche mit einer Chemikalie.

Als Befestigungselement kommt typischerweise ein Niet zur Anwendung.

Das Verstärkungselement besteht bevorzugt aus hochfestem Material: Dabei ist insbesondere an Stahl oder auch Leichtmetall, insbesondere Aluminium oder Magnesium, gedacht.

Fertigungstechnische Vorteile lassen sich erzielen, wenn - wie bereits erwähnt - der Verbund von Verstärkungselement und Reibbelag in einem gemeinsamen Prozess erfolgt (was allerdings keineswegs zwingend ist). Danach werden also durch Einlegen des Verstärkungselements in ein Formwerkzeug für den Reibbelag der Reibbelag und das Verstärkungselement in-situ miteinander verbunden.

Mit der vorgeschlagenen Lösung ist die kostengünstige Fertigung einer Kupplungsscheibe möglich, die sich durch verbesserte Gebrauchseigenschaften auszeichnet. Sie hat ein höheres Biegewiderstandsmoment, so dass der Reibbelag gleichmäßiger verschlissen wird. Ferner ist die Anbindung an den Belagträger verbessert, insbesondere was die Fixierung in Umfangsrichtung anbelangt (keine Langlochbildung).

Sowohl der Fertigungs- als auch der Montageaufwand können im Vergleich mit einigen anderen vorbekannten Lösungen reduziert werden. Mit der vorgeschlagenen Ausgestaltung kann eine künstliche Belagfederwegvergrößerung erreicht werden. Dazu kann nach einer Ausgestaltung der Erfindung das Verstärkungselement als Lamellenblech oder Segment auf der Rückseite des Reibbelags angebracht werden.

Durch das Verstärkungselement und die damit einher gehende Erhöhung der Festigkeit der Nietverbindung kann eine stärkere Vernietung bzw. eine höhere Nietkraft erzeugt werden bzw. es können kleinere bzw. weniger Nieten eingesetzt werden, um dieselbe Festigkeit der Nietverbindung zu erreichen. Dadurch kann auch in vorteilhafter Weise das Massenträgheitsmoment vermindert werden. Durch das Zusammenwirken der Nieten mit dem Verstärkungselement wird die Nietverbindung also wesentlich stabiler und die Anbindung des Reibbelags an den Belagträger fester.

Eine mögliche Tellerung des Reibbelags kann als künstliche Belagfederwegvergrößerung genutzt werden.

Die Kupplungseinrichtung, die mit der erfindungsgemäßen Kupplungsscheibe ausgestattet ist, zeichnet sich durch verbesserten Einkuppelkomfort aus.

In der Zeichnung sind Ausführungsbeispiele der Erfindung dargestellt. Es zeigen:
- Fig. 1: einen teilweise unterbrochenen Radialschnitt durch eine Kupplungsscheibe einer Kraftfahrzeugkupplungseinrichtung, nämlich den Schnitt A-A gemäß Fig. 2,
- Fig. 2: die Vorderansicht der Kupplungsscheibe nach Fig. 1,
- Fig. 3: eine erste Ausführungsform eines Teils des Verstärkungselements in der Vorderansicht,
- Fig.4: eine zweite Ausführungsform des Verstärkungselements in der Vorder ansicht,
- Fig. 5: eine dritte Ausführungsform des Verstärkungselements in der Vorderansicht,
- Fig. 6: eine vierte Ausführungsform des Verstärkungselements, wobei dieses aus zwei zusammenwirkenden Teilen besteht, und
- Fig.7: den Radialschnitt durch den Reibbelag in im Verhältnis zu Fig. 1 vergrößerter Darstellung.

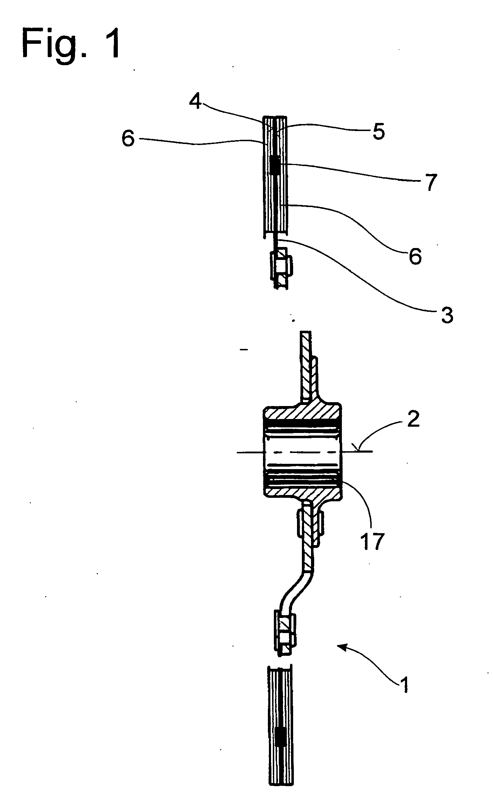

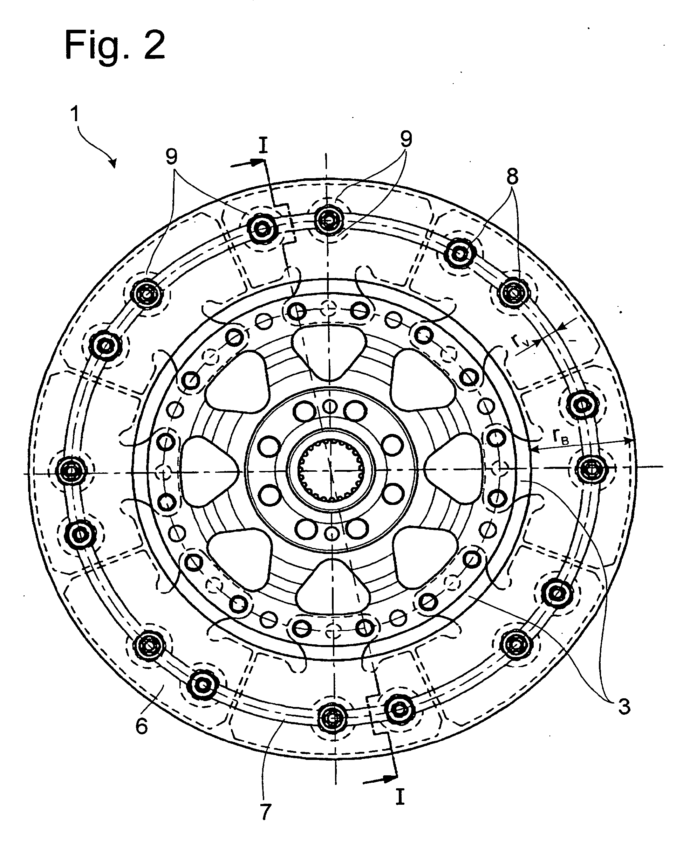

In den Figuren 1 und 2 eine Kupplungsscheibe 1 dargestellt, die in einer Kupplungseinrichtung zwischen einer Anpressplatte und einem Schwungrad angeordnet wird. Die Kupplungsscheibe 1 rotiert dabei im Betrieb um die Drehachse 2. Zur Aufnahme auf einer nicht dargestellten Welle weist die Kupplungsscheibe 1 im Bereich der Drehachse 2 ein Nabenteil 17 mit Vielkeil-Innenprofil auf. Die Kupplungsscheibe 1 ist dabei im wesentlichen zweiteilig ausgebildet. Sie hat einen Belagträger 3 mit im wesentlichen kreisringförmiger Gestalt, an dessen beiden Stirnseiten 4 und 5 je ein Reibbelag 6 festgelegt ist. Die Festlegung erfolgt mit Befestigungselementen 8 in Form von Nieten, wozu der Reibbelag 6 entsprechende Ausnehmungen aufweist.

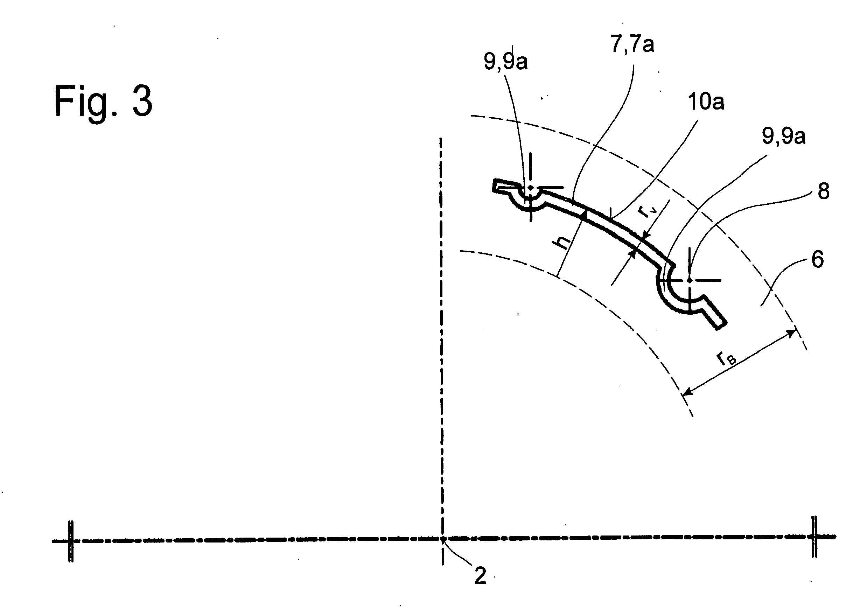

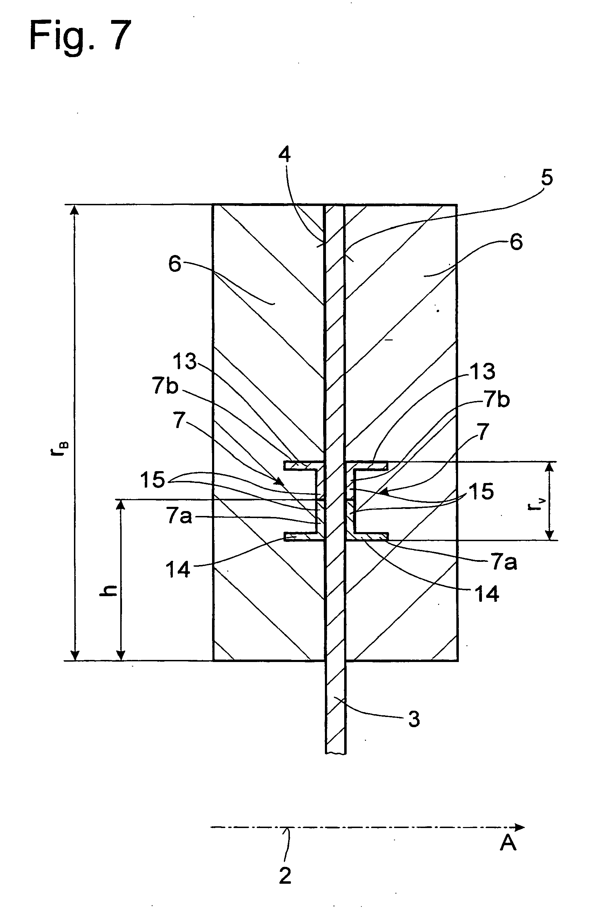

Damit die Kupplungsscheibe 1 insbesondere im Bereich des Reibbelags 6 bzw. der Reibbeläge 6 ein hohes Widerstandsmoment gegen Biegung aufweist, ist in die Anordnung bestehend aus Reibbelägen 6 und Belagträger 3 ein Verstärkungselement 7 integriert. In Fig. 1 ist dieses nur schematisch angedeutet; Details gehen aus Fig. 7 hervor. Das Verstärkungselement 7 kann in unterschiedlicher Weise ausgebildet sein, was aus den Figuren 3 bis 6 hervorgeht.

Generell ist das Verstärkungselement 7 ein vorzugsweise aus Blech mit einer Dicke von 1,0 bis 1,3 mm bestehendes Teil, das sich über eine gewisse Erstreckung r_{V} in radiale Richtung ausdehnt. Unter dieser Ausdehnung ist diejenige des Grundkörpers des Verstärkungselements 7 zu verstehen, d. h. später noch zu diskutierende Verdickungen 9 und Ausgleichsabschnitte 16 sind dabei nicht betrachtet. Die radiale Erstreckung r_{V} des Verstärkungselements 7 beträgt nur einen kleinen Teil der radialen Erstreckung r_{B} des Reibbelags 6. Hierzu wird auf Fig. 7 verwiesen, wo die Verhältnisse schematisch angegeben sind. Unter einem kleinen Teil der Erstreckung ist namentlich ein Wert zu verstehen, der maximal 25 % der radialen Erstreckung des Reibbelags entspricht.

Wie weiter in Fig. 7 gesehen werden kann, ist das Verstärkungselement 7 in einer radialen Höhe über dem inneren Durchmesser des Reibbelags 6 angeordnet, die etwa ein Drittel der radialen Erstreckung r_{B} beträgt - vom Innendurchmesser aus gemessen. Beim "Backen" des Reibbelags mit eingelegtem Verstärkungselement kommt es zu Volumenverringerungen dahingehend, dass der Außendurchmesser kleiner und der Innendurchmesser größer wird. Durch Anordnung in der genannten radialen Höhe befindet sich das Versteifungselement in der "neutralen Zone" des Reibbelags hinsichtlich des Schrumpfens beim Herstellprozess. Diese "neutrale Zone", bei der die Durchmesservergrößerung des Innendurchmessers und die Durchmesserverkleinerung des Außendurchmessers sich nahezu aufheben, liegt bei etwa 1/3 der radialen Reibbelagerstreckung vom Innendurchmesser aus betrachtet. Abhängig von der speziellen geometrischen Ausbildung, z. B. durch die Größe und Zahl der Bohrungen für die Nietanbindung, kann sich diese Lage jedoch auch verändern.

Grundsätzlich möglich ist es auch, das Verstärkungselement 7 außerhalb der neutralen Zone einzubringen, wenn beispielsweise eine Tellerung oder Wölbung des Reibbelags beim "Ausbacken" im Herstellprozess gewünscht sein sollte. Damit kann der Reibbelag leicht tellerfederartig gestaltet werden.

Verschiedene Ausformungen des Verstärkungselements 7 ergeben sich aus den Figuren 3 bis 6.

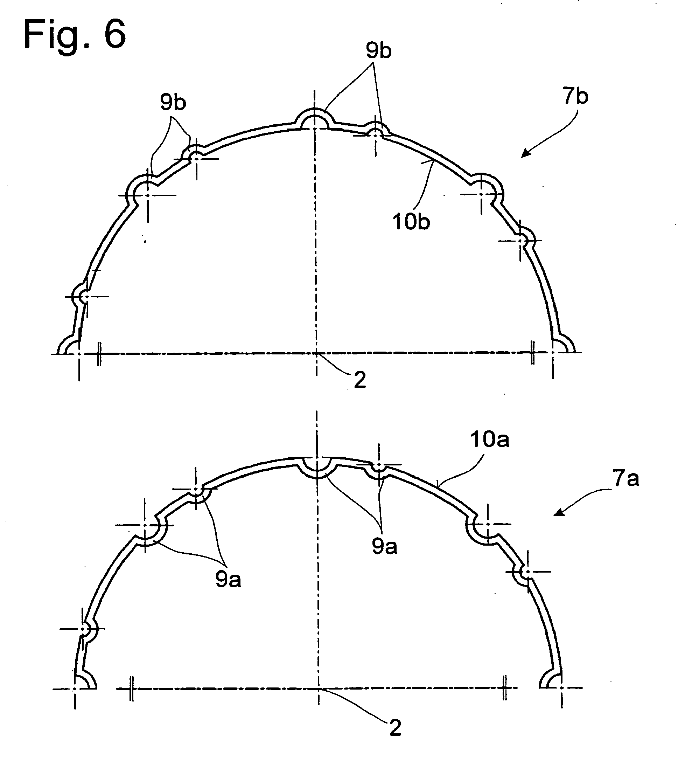

Gemäß Fig. 3 erstreckt sich das Verstärkungselement 7 nur etwa über 45° des Umfangs der Kupplungsscheibe. Es werden also in diesem Falle ca. acht Verstärkungselements 7 in Umfangsrichtung aneinandergrenzend aneinander gesetzt, um den gesamten Umfang abzudecken. In Fig. 3 dargestellt ist nur ein Teil 7a eines zweiteiligen Verstärkungselements 7, wie später noch im Zusammenhang mit Fig. 6 erläutert werden wird. Das in Fig. 3 zu sehende Verstärkungselement 7 hat zwei Verdickungen 9 bzw. 9a, die zum Einfassung des Nietschaftes dienen und sich jeweils etwa über 180° Umfangswinkel des Nietschaftes erstrecken. Bei zwei entsprechend zusammenwirkenden Teilen 7a wird der Nietschaft also im wesentlichen vollständig über seinen gesamten Umfang umfasst.

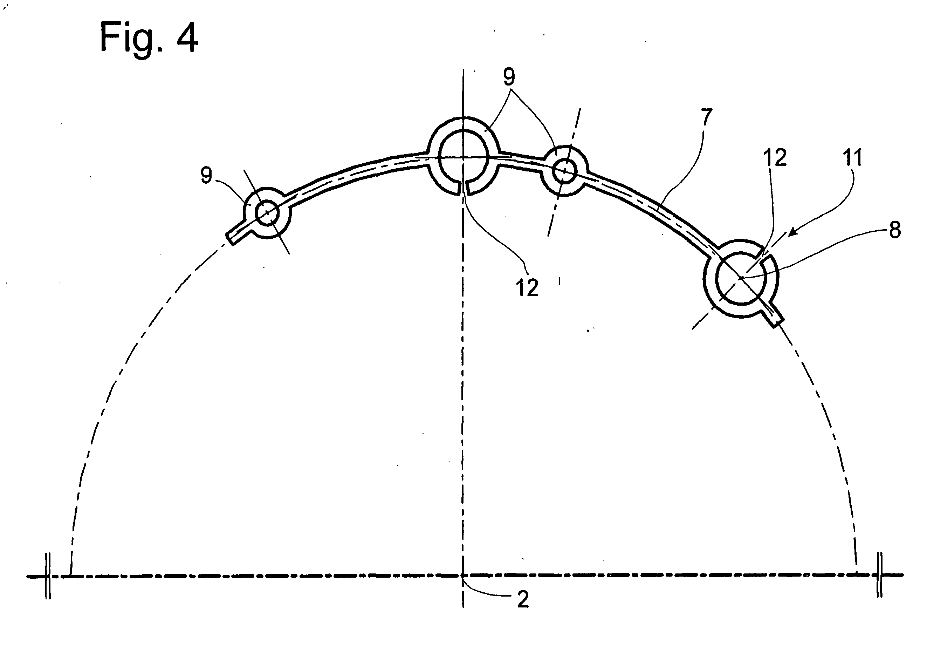

Das in Fig. 4 skizzierte Verstärkungselement 7 erstreckt sich etwa über 90° des Umfangs der Kupplungsscheibe 1, so dass vier zusammenwirkende Verstärkungselemente 7 den gesamten Umfang der Kupplungsscheibe abdecken. Wie in Fig. 4 gesehen werden kann, hat das Verstärkungselement 7 insgesamt vier ringsförmig ausgebildete Verdickungen 9, die jeweils einen Nietschaft umfassen. Zwei der Verdickungen sind an einer Umfangsstelle 11 unterbrochen, d. h. sie weisen eine Unterbrechung 12 auf, die sich über ca. 10° des Umfangs der ringförmigen Verdickung 9 ausdehnt. Die Unterbrechungen 12 haben den Effekt, dass das gesamte Verstärkungselement 7 leicht in Umfangsrichtung gedehnt werden kann. Dies ist - wie bereits oben angesprochen - dann von Bedeutung, wenn es zu inneren Spannungen im Reibbelag kommt, wenn dieser zusammen mit dem Verstärkungselement in-situ gefertigt wird. Durch geringfügiges Aufdehnen in Umfangsrichtung werden Spannungen eliminiert.

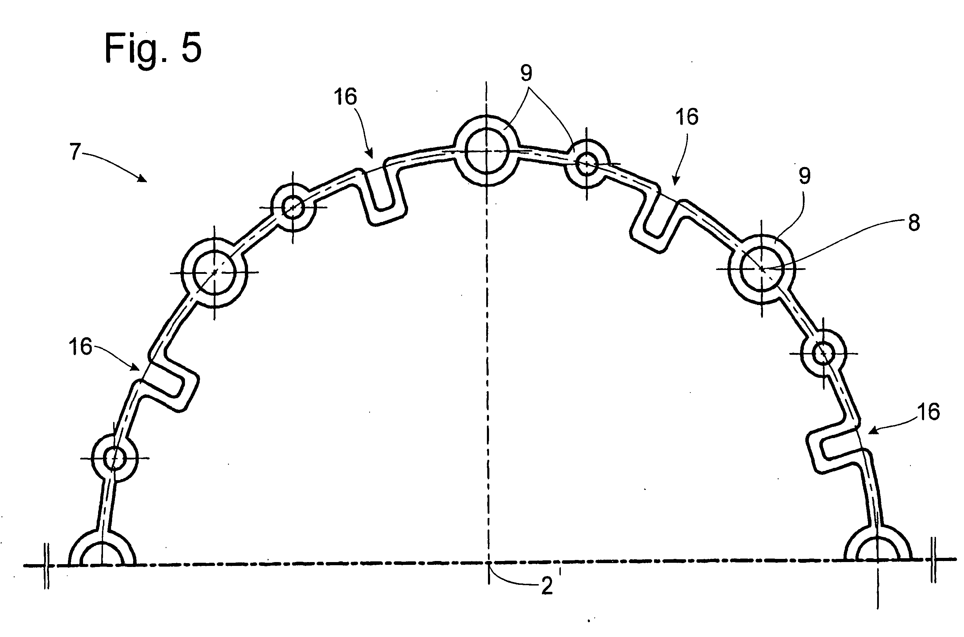

Bei der Lösung gemäß Fig. 5 ist das Verstärkungselement 7 ringförmig ausgebildet, d. h. er erstreckt sich über den gesamten Umfang der Kupplungsscheibe 1. Um innere Spannungen zwischen Reibbelag 6 und Verstärkungselement 7 in Umfangsrichtung auszugleichen, sind insgesamt 8 Ausgleichsabschnitte 16 vorgesehen, die als mäanderförmige Ausbildung des Verstärkungselements 7 - in Richtung der Drehachse betrachtet - realisiert sind. Ansonsten sind eine Anzahl Verdickungen 9 vorgesehen, die die Nietschäfte der Befestigungselemente 8 aufnehmen.

Aus Fig. 6 geht hervor, dass das Verstärkungselement 7 auch aus Teilen zusammengesetzt werden kann, und zwar in der Art, dass zwei Teile 9a und 9b an radial ausgerichteten Oberflächen 10a und 10b aneinandergesetzt und gegebenenfalls dann verbunden werden. Jedes Teil 7a, 7b hat Teilverdickungen 9a bzw. 9b, die im zusammengesetzten Zustand der beiden Teile 7a, 7b insgesamt eine Aufnahmebohrung für den Nietschaft bilden.

Wie aus Fig. 7 hervorgeht, hat dort das Verstärkungselement 7 zwei U-förmige Querschnitte, was der Erhöhung der Biegesteifigkeit dienlich ist. Die beiden Schenkel 13 und 14 der U-förmigen Kontur erstrecken sich in Achsrichtung A, wodurch ein hohes Biegewiderstandsmoment der Kupplungsscheibe 1 erreicht wird. Der Verbindungsabschnitt 15 der U-förmigen Kontur bildet eine Anlagefläche für die Nietköpfe, die in Fig. 7 aufgrund des dem Schnitt A-A gemäß Fig. 2 entsprechenden Schnitt nicht zu sehen sind.

Die Reibbeläge 6 werden in der Regel aus einem harzgebundenen Garngemisch hergestellt und in die gewünschte Form gepresst. Der Rohling wird dann mittels eines Pressstempels geformt, wobei überschüssiges Harz aus der Form herausgepresst wird. Unter Hitzeeinfluss härtet der Reibbelag aus. Bohrungen zum Vernieten der Reibbeläge und Rillen auf der Reibseite werden dabei gleich mitgefertigt. In die Pressform kann das Verstärkungselement vorab eingelegt werden. Hierdurch kommt es zu einer klebeähnlichen Verbindung zwischen Reibbelag 6 und Verstärkungselement 7.

Weiterhin ermöglicht das Verhindern bzw. das Verringern von Setzverlusten infolge des Fließens der Reibbelagmasse zwischen zwei Auflagebereichen des Belagträgers eine bessere Ausnutzung der Belagfederung und somit eine Reduzierung des tatsächlichen Belagfederweges, der dem Reibbelagvolumen zugeteilt werden kann. Damit erhöht sich die Lebensdauer des Reibbelags.

Die Blechdicke des Verstärkungselements entspricht in etwa der Stärke, die im Reibbelag im Nietgrund als Reststärke zum sicheren Vernieten vorgehalten wird. Möglich ist auch eine geringere Dicke des Verstärkungselements, da dieser eine deutlich höhere Festigkeit und Bauteilsteife aufweist, als es für das Material des Reibbelags gilt.

### Bezugszeichenliste

- 1: Kupplungsscheibe
- 2: Drehachse
- 3: Belagträger
- 4: Stirnseite
- 5: Stirnseite
- 6: Reibbelag
- 7: Verstärkungselement
- 7a: Teil des Verstärkungselements
- 7b: Teil des Verstärkungselements
- 8: Befestigungselement (Niet)
- 9: Verdickung
- 9a: Teilverdickung
- 9b: Teilverdickung
- 10a: radial ausgerichtete Oberfläche
- 10b: radial ausgerichtete Oberfläche
- 11: Umfangsstelle
- 12: Unterbrechung
- 13: Schenkel
- 14: Schenkel
- 15: Verbindungsabschnitt
- 16: Ausgleichsabschnitt
- 17: Nabenteil

- r_{V}: radiale Erstreckung des Verstärkungselements
- r_{B}: radiale Erstreckung des Reibbelags
- A: Achsrichtung
- h: radiale Höhe des Verstärkungselements

## Patentansprüche

1. Kupplungsscheibe (1) für eine Kupplungseinrichtung, insbesondere für eine Kraftfahrzeugkupplungseinrichtung, umfassend einen um eine Drehachse (2) herum angeordneten und im wesentlichen scheibenförmig oder ringscheibenförmig ausgebildeten Belagträger (3), an dem, vorzugsweise an beiden seiner Stirnseiten (4, 5), mindestens ein Reibbelag. (6) befestigt ist, wobei in oder an dem mindestens einen Reibbelag (6) ein Verstärkungselement (7) angeordnet ist, wobei das Verstärkungselement (7) als sich über einen vorgegebenen Umfangsabschnitt der Kupplungsscheibe (1) herum erstreckendes Ringteil oder Ringabschnittteil ausgebildet ist,
**dadurch gekennzeichnet,**
**dass** der Belagträger (3), mindestens ein Reibbelag (6) und das Verstärkungselement (7) mit mindestens einem Befestigungselement (8) miteinander verbunden sind, wobei das Verstärkungselement (7) mindestens eine Verdickung (9) zur zumindest teilweisen Umfassung des mindestens einen Befestigungselements (8) aufweist, und dass die radiale Erstreckung (r_{V}) vom Verstärkungselement (7), abgesehen von der mindestens einen Verdickung (9), klein ist im Verhältnis zur radialen Erstreckung (r_{R}) des Reibbelags (6).

2. Kupplungsscheibe nach Anspruch 1, **dadurch gekennzeichnet, dass** die radiale Erstreckung (r_{V}) des Verstärkungselements (7) maximal 25 % der radialen Erstreckung (r_{R}) des Reibbelags (6) beträgt.

3. Kupplungsscheibe nach Anspruch 2, **dadurch gekennzeichnet, dass** die radiale Erstreckung (r_{V}) des Verstärkungselements (7) maximal 15 % der radialen Erstreckung (r_{R}) des Reibbelags (6) beträgt.

4. Kupplungsscheibe nach einem der Ansprüche 1 bis 3, **dadurch gekennzeichnet, dass** sich das Verstärkungselement (7) ringförmig über den gesamten Umfang der Kupplungsscheibe (1) erstreckt.

5. Kupplungsscheibe nach einem der Ansprüche 1 bis 3, **dadurch gekennzeichnet, dass** sich das Verstärkungselement (7) nur über einen Teil des Umfangs der Kupplungsscheibe (1) erstreckt.

6. Kupplungsscheibe nach Anspruch 5, **dadurch gekennzeichnet, dass** sich das Verstärkungselement (7) über einen Umfangsabschnitt der Kupplungsscheibe (1) zwischen 45° und 180° erstreckt.

7. Kupplungsscheibe nach einem der Ansprüche 1 bis 6, **dadurch gekennzeichnet, dass** das oder jedes Verstärkungselement (7) aus zwei Teilen (7a, 7b) besteht, die an einer radial ausgerichteten Oberfläche (10a, 10b) aneinander liegen.

8. Kupplungsscheibe nach Anspruch 7, **dadurch gekennzeichnet, dass** die beiden Teile (7a, 7b) des Verstärkungselements (7) jeweils mindestens eine Teilverdickung (9a, 9b) aufweisen, die zusammenwirkend die Verdickung (9) zur zumindest teilweisen Umfassung des mindestens einen Befestigungselements (8) bilden.

9. Kupplungsscheibe nach einem der Ansprüche 1 bis 8, **dadurch gekennzeichnet, dass** die Verdickungen (9) als Ring oder Ringabschnitt ausgebildet sind, der sich zumindest teilweise um ein Befestigungselement (8) herum erstreckt.

10. Kupplungsscheibe nach Anspruch 9, **dadurch gekennzeichnet, dass** der Ringabschnitt an mindestens einer Umfangsstelle (11) eine Unterbrechung (12) aufweist.

11. Kupplungsscheibe nach Anspruch 10, **dadurch gekennzeichnet, dass** sich die Unterbrechung (12) über einen Umfangsabschnitt zwischen 5° und 20° erstreckt.

12. Kupplungsscheibe nach einem der Ansprüche 1 bis 11, **dadurch gekennzeichnet, dass** zumindest ein Teil des Verstärkungselements (7) in einem Radialschnitt eine U-förmige Kontur aufweist.

13. Kupplungsscheibe nach Anspruch 12, **dadurch gekennzeichnet, dass** sich die beiden Schenkel (13, 14) der U-förmigen Kontur in Achsrichtung (A) der Kupplungsscheibe (1) erstrecken.

14. Kupplungsscheibe nach Anspruch 12 oder 13, **dadurch gekennzeichnet, dass** der Verbindungsabschnitt (15) der U-förmigen Kontur als Auflagefläche für einen Teil des Befestigungselements (8) ausgebildet ist.

15. Kupplungsscheibe nach einem der Ansprüche 1 bis 14, **dadurch gekennzeichnet, dass** das Verstärkungselement (7) mindestens einen Ausgleichsabschnitt (16) zum Längenausgleich in Umfangsrichtung aufweist.

16. Kupplungsscheibe nach Anspruch 15, **dadurch gekennzeichnet, dass** der Ausgleichsabschnitt (16) durch einen mäanderförmigen Verlauf des Verstärkungselements (7) gebildet wird.

17. Kupplungsscheibe nach einem der Ansprüche 1 bis 16, **dadurch gekennzeichnet, dass** das Verstärkungselement (7) im Reibbelag (6) in einer radialen Höhe (h) angeordnet ist, die zwischen 20% und 80% der radialen Erstreckung (r_{R}) des Reibbelags (6), vom radial innenliegenden Ende des Reibbelags (6) aus gemessen, beträgt.

18. Kupplungsscheibe nach Anspruch 17, **dadurch gekennzeichnet, dass** das Verstärkungselement (7) im Reibbelag (6) in einer radialen Höhe (h) angeordnet ist, die zwischen 30% und 40% der radialen Erstreckung (r_{R}) des Reibbelags (6), vom radial innenliegenden Ende des Reibbelags (6) aus gemessen, beträgt.

19. Kupplungsscheibe nach einem der Ansprüche 1 bis 18, **dadurch gekennzeichnet, dass** die Oberfläche des Verstärkungselements (7) aufgeraut ist.

20. Kupplungsscheibe nach Anspruch 19, **dadurch gekennzeichnet, dass** in die Oberfläche des Verstärkungselements (7) eine Riffelung eingebracht ist.

21. Kupplungsscheibe nach Anspruch 19, **dadurch gekennzeichnet, dass** die Oberfläche durch Beaufschlagung mit einem Medium, insbesondere durch Sandstrahlen, aufgeraut ist.

22. Kupplungsscheibe nach Anspruch 19, **dadurch gekennzeichnet, dass** die Oberfläche durch Beaufschlagung mit einer Chemikalie aufgeraut ist.

23. Kupplungsscheibe nach einem der Ansprüche 1 bis 22, **dadurch gekennzeichnet, dass** das Befestigungselement (8) ein Niet ist.

24. Kupplungsscheibe nach einem der Ansprüche 1 bis 23, **dadurch gekennzeichnet, dass** das Verstärkungselement (7) aus hochfestem Material besteht.

25. Kupplungsscheibe nach Anspruch 24, **dadurch gekennzeichnet, dass** das Verstärkungselement (7) aus Stahl besteht.

26. Kupplungsscheibe nach Anspruch 24, **dadurch gekennzeichnet, dass** das Verstärkungselement (7) aus Leichtmetall, insbesondere aus Aluminium oder Magnesium, besteht.

27. Kupplungsscheibe nach einem der Ansprüche 1 bis 26, **dadurch gekennzeichnet, dass** der Reibbelag (6) bzw. die Reibbeläge (6) und das mindestens eine Verstärkungselement (7) bei der Herstellung des Reibbelags (6) bzw. der Reibbeläge (6) in-situ miteinander verbunden sind.

## Claims

1. Clutch disc (1) for a clutch device, in particular for a motor vehicle clutch device, comprising a lining carrier (3) which is arranged around a rotational axis (2) and is of substantially disc-shaped or annular-disc-shaped design and to which is fastened, preferably at both of its face sides (4, 5), at least one friction lining (6), with a reinforcement element (7) being arranged in or on the at least one friction lining (6), with the reinforcement element (7) being designed as a ring part or ring section part which extends around over a predefined peripheral section of the clutch disc (1),
**characterized**
**in that** the lining carrier (3), at least one friction lining (6) and the reinforcement element (7) are connected to one another by means of at least one fastening element (8), with the reinforcement element (7) having at least one thickened portion (9) for at least partially surrounding the at least one fastening element (8), and in that the radial extent (r_{V}) of the reinforcement element (7), not including the at least one thickened portion (9), is small in relation to the radial extent (r_{R}) of the friction lining (6).

2. Clutch disc according to Claim 1, **characterized in that** the radial extent (r_{V}) of the reinforcement element (7) is a maximum of 25% of the radial extent (r_{R}) of the friction lining (6).

3. Clutch disc according to Claim 2, **characterized in that** the radial extent (r_{V}) of the reinforcement element (7) is a maximum of 15% of the radial extent (r_{R}) of the friction lining (6).

4. Clutch disc according to one of Claims 1 to 3, **characterized in that** the reinforcement element (7) extends annularly over the entire periphery of the clutch disc (1).

5. Clutch disc according to one of Claims 1 to 3, **characterized in that** the reinforcement element (7) extends only over a part of the periphery of the clutch disc (1).

6. Clutch disc according to Claim 5, **characterized in that** the reinforcement element (7) extends over a peripheral section of the clutch disc (1) of between 45° and 180°.

7. Clutch disc according to one of Claims 1 to 6, **characterized in that** the reinforcement element (7) or each reinforcement element (7) is composed of two parts (7a, 7b) which bear against one another at a radially aligned surface (10a, 10b).

8. Clutch disc according to Claim 7, **characterized in that** the two parts (7a, 7b) of the reinforcement element (7) have in each case at least one partial thickened portion (9a, 9b) which, in interaction, form the thickened portion (9) for at least partially surrounding the at least one fastening element (8).

9. Clutch disc according to one of Claims 1 to 8, **characterized in that** the thickened portions (9) are embodied as a ring or ring section which extends at least partially around a fastening element (8).

10. Clutch disc according to Claim 9, **characterized in that** the ring section has a discontinuity (12) at at least one peripheral point (11).

11. Clutch disc according to Claim 10, **characterized in that** the discontinuity (12) extends over a peripheral section of between 5° and 20°.

12. Clutch disc according to one of Claims 1 to 11, **characterized in that** at least a part of the reinforcement element (7) has a U-shaped contour in radial section.

13. Clutch disc according to Claim 12, **characterized in that** the two limbs (13, 14) of the U-shaped contour extend in the axial direction (A) of the clutch disc (1).

14. Clutch disc according to Claim 12 or 13, **characterized in that** the connecting section (15) of the U-shaped contour is embodied as a contact face for a part of the fastening element (8).

15. Clutch disc according to one of Claims 1 to 14, **characterized in that** the reinforcement element (7) has at least one compensating section (16) for length compensation in the peripheral direction.

16. Clutch disc according to Claim 15, **characterized in that** the compensating section (16) is formed by a meandering profile of the reinforcement element (7).

17. Clutch disc according to one of Claims 1 to 16, **characterized in that** the reinforcement element (7) in the friction lining (6) is arranged at a radial height (h) which is between 20% and 80% of the radial extent (r_{R}) of the friction lining (6) measured from the radially inner end of the friction lining (6).

18. Clutch disc according to Claim 17, **characterized in that** the reinforcement element (7) in the friction lining (6) is arranged at a radial height (h) which is between 30% and 40% of the radial extent (r_{R}) of the friction lining (6) measured from the radially inner end of the friction lining (6).

19. Clutch disc according to one of Claims 1 to 18, **characterized in that** the surface of the reinforcement element (7) is roughened.

20. Clutch disc according to Claim 19, **characterized in that** a corrugation is formed in the surface of the reinforcement element (7).

21. Clutch disc according to Claim 19, **characterized in that** the surface is roughened by being acted on with a medium, in particular by means of sandblasting.

22. Clutch disc according to Claim 19, **characterized in that** the surface is roughened by being acted on with a chemical.

23. Clutch disc according to one of Claims 1 to 22, **characterized in that** the fastening element (8) is a rivet.

24. Clutch disc according to one of Claims 1 to 23, **characterized in that** the reinforcement element (7) is composed of high-strength material.

25. Clutch disc according to Claim 24, **characterized in that** the reinforcement element (7) is composed of steel.

26. Clutch disc according to Claim 24, **characterized in that** the reinforcement element (7) is composed of light metal, in particular of aluminium or magnesium.

27. Clutch disc according to one of Claims 1 to 26, **characterized in that** the friction lining (6) or the friction linings (6) and the at least one reinforcement element (7) are connected to one another *in situ* during the production of the friction lining (6) or of the friction linings (6).

## Revendications

1. Disque d'embrayage (1) pour un dispositif d'embrayage, en particulier pour un dispositif d'embrayage de véhicule automobile, comprenant un support de garniture (3) disposé autour d'un axe de rotation (2) et configuré essentiellement en forme de disque ou en forme de disque annulaire, sur lequel une garniture de friction (6) est disposée de préférence sur ses deux faces frontales (4, 5), dans lequel un élément de renforcement (7) est disposé dans ou sur au moins une garniture de friction (6), dans lequel l'élément de renforcement (7) se présente sous la forme d'une pièce annulaire ou d'une pièce en segment annulaire s'étendant sur une partie prédéterminée de la périphérie autour du disque d'embrayage (1), **caractérisé en ce que** le support de garniture (3), au moins une garniture de friction (6) et l'élément de renforcement (7) sont assemblés l'un à l'autre au moyen d'au moins un élément de fixation (8), dans lequel l'élément de renforcement (7) comprend au moins une surépaisseur (9) destinée à recevoir au moins en partie l'au moins un élément de fixation (8), et **en ce que** l'extension radiale (rᵥ) de l'élément de renforcement (7), indépendamment de l'au moins une surépaisseur (9), est petite par rapport à l'extension radiale (r_{R}) de la garniture de friction (6).

2. Disque d'embrayage selon la revendication 1, **caractérisé en ce que** l'extension radiale (rᵥ) de l'élément de renforcement (7) vaut au maximum 25 % de l'extension radiale (r_{R}) de la garniture de friction (6).

3. Disque d'embrayage selon la revendication 2, **caractérisé en ce que** l'extension radiale (rᵥ) de l'élément de renforcement (7) vaut au maximum 15 % de l'extension radiale (r_{R}) de la garniture de friction (6).

4. Disque d'embrayage selon l'une quelconque des revendications 1 à 3, **caractérisé en ce que** l'élément de renforcement (7) s'étend en forme d'anneau sur toute la périphérie du disque d'embrayage (1).

5. Disque d'embrayage selon l'une quelconque des revendications 1 à 3, **caractérisé en ce que** l'élément de renforcement (7) ne s'étend que sur une partie de la périphérie du disque d'embrayage (1).

6. Disque d'embrayage selon la revendication 5, **caractérisé en ce que** l'élément de renforcement (7) s'étend sur une partie de la périphérie du disque d'embrayage (1) comprise entre 45° et 180°.

7. Disque d'embrayage selon l'une quelconque des revendications 1 à 6, **caractérisé en ce que** le ou chaque élément de renforcement (7) se compose de deux parties (7a, 7b), qui sont appliquées l'une contre l'autre dans une surface orientée radialement (10a, 10b).

8. Disque d'embrayage selon la revendication 7, **caractérisé en ce que** les deux parties (7a, 7b) de l'élément de renforcement (7) présentent chaque fois au moins une surépaisseur partielle (9a, 9b), qui forment en coopérant la surépaisseur (9) destinée à contenir au moins en partie l'au moins un élément de fixation (8).

9. Disque d'embrayage selon l'une quelconque des revendications 1 à 8, **caractérisé en ce que** les surépaisseurs (9) ont la forme d'un anneau ou d'une partie d'anneau, qui s'étend au moins en partie autour d'un élément de fixation (8).

10. Disque d'embrayage selon la revendication 9, **caractérisé en ce que** la partie d'anneau comporte une interruption (12) en au moins un endroit (11) de la périphérie.

11. Disque d'embrayage selon la revendication 10, **caractérisé en ce que** l'interruption (12) s'étend sur une partie de la périphérie comprise entre 5° et 20°.

12. Disque d'embrayage selon l'une quelconque des revendications 1 à 11, **caractérisé en ce qu'**au moins une partie de l'élément de renforcement (7) présente un contour en forme de U dans une coupe radiale.

13. Disque d'embrayage selon la revendication 12, **caractérisé en ce que** les deux branches (13, 14) du contour en forme de U s'étendent dans la direction axiale (A) du disque d'embrayage (1).

14. Disque d'embrayage selon la revendication 12 ou 13, **caractérisé en ce que** la partie de jonction (15) du contour en forme de U forme une face d'appui pour une partie de l'élément de fixation (8).

15. Disque d'embrayage selon l'une quelconque des revendications 1 à 14, **caractérisé en ce que** l'élément de renforcement (7) comprend au moins une partie de compensation (16) pour la compensation en longueur dans la direction périphérique.

16. Disque d'embrayage selon la revendication 15, **caractérisé en ce que** la partie de compensation (16) est formée par un tracé sinueux de l'élément de renforcement (7).

17. Disque d'embrayage selon l'une quelconque des revendications 1 à 16, **caractérisé en ce que** l'élément de renforcement (7) est disposé dans la garniture de friction (6), à une hauteur radiale (h) qui vaut entre 20 % et 80 % de l'extension radiale (r_{R}) de la garniture de friction (6), mesurée à partir de l'extrémité radialement intérieure de la garniture de friction (6).

18. Disque d'embrayage selon la revendication 17, **caractérisé en ce que** l'élément de renforcement (7) est disposé dans la garniture de friction (6), à une hauteur radiale (h) qui vaut entre 30 % et 40 % de l'extension radiale (r_{R}) de la garniture de friction (6), mesurée à partir de l'extrémité radialement intérieure de la garniture de friction (6).

19. Disque d'embrayage selon l'une quelconque des revendications 1 à 18, **caractérisé en ce que** la surface de l'élément de renforcement (7) est dépolie.

20. Disque d'embrayage selon la revendication 19, **caractérisé en ce que** la surface de l'élément de renforcement (7) présente un striage.

21. Disque d'embrayage selon la revendication 19, **caractérisé en ce que** la surface est dépolie par traitement avec un fluide, en particulier par sablage.

22. Disque d'embrayage selon la revendication 19, **caractérisé en ce que** la surface est dépolie par traitement avec un produit chimique.

23. Disque d'embrayage selon l'une quelconque des revendications 1 à 22, **caractérisé en ce que** l'élément de fixation (8) est un rivet.

24. Disque d'embrayage selon l'une quelconque des revendications 1 à 23, **caractérisé en ce que** l'élément de renforcement (7) est composé d'une matière à haute résistance.

25. Disque d'embrayage selon la revendication 24, **caractérisé en ce que** l'élément de renforcement (7) se compose d'acier.

26. Disque d'embrayage selon la revendication 24, **caractérisé en ce que** l'élément de renforcement (7) se compose d'un métal léger, en particulier d'aluminium ou de magnésium.

27. Disque d'embrayage selon l'une quelconque des revendications 1 à 26, **caractérisé en ce que** la garniture de friction (6) ou les garnitures de friction (6) et l'au moins un élément de renforcement (7) sont assemblés l'un à l'autre in situ lors de la fabrication de la garniture de friction (6) ou des garnitures de friction (6).
